# NOUVEAU FASCICULE DE BREVET EUROPEEN

(11) **EP 2 624 685 B2**
(45) Date de publication et mention de la décision concernant l'opposition: **16.03.2022**
(45) Mention de la délivrance du brevet: 13.12.2017
(21) Numéro de dépôt: 11779777.9
(22) Date de dépôt: 03.10.2011
(51) Int. Cl.: B05B 12/12, B05B 13/00, A01M 7/00, B60P 3/30

(54) **PROCÉDÉ DE PULVÉRISATION D'UN LIQUIDE PHYTOSANITAIRE SUR UN TERRAIN CULTIVÉ AU MOYEN D'UN ENGIN AGRICOLE**
VERFAHREN ZUM SPRÜHEN EINER PHYTOSANITÄREN FLÜSSIGKEIT AUF MIT EINER LANDWIRTSCHAFTLICHEN MASCHINE KULTIVIERTEN BODEN
METHOD FOR SPRAYING A PHYTOSANITARY LIQUID ON LAND CULTIVATED BY MEANS OF AN AGRICULTURAL MACHINE

(30) Priorité: 05.10.2010 FR 1058073
(43) Date de publication de la demande: 14.08.2013
(73) Titulaire: EXEL INDUSTRIES, 51200 Epernay (FR)
(72) Inventeur: BALLU, Patrick, F-51100 Reims (FR)
(74) Mandataire: Lavoix
(86) Numéro de dépôt international: PCT/FR2011/052295
(87) Numéro de publication internationale: WO 2012/045963

(56) Documents cités:
- EP-A1- 1 444 894
- WO-A2-2011/073751
- DE-A1- 4 140 254
- US-A- 5 348 226
- Handler et al: "Grosse Technik für kleine Schläge", Der Fortschrittliche Landwirt, vol. 22, 2009, pages 46-51,

## Description

La présente invention concerne un engin agricole de pulvérisation ainsi qu'un procédé de pulvérisation d'un liquide phytosanitaire sur un terrain cultivé au moyen d'un tel engin.

Il est connu d'utiliser un engin agricole pourvu d'une rampe de pulvérisation pour répandre un liquide phytosanitaire sur une végétation plantée sur un terrain pouvant comporter des irrégularités, par exemple des trous ou des bosses, et dont la pente peut varier.

Pour que la répartition du liquide phytosanitaire sur la végétation soit satisfaisante, la rampe ne doit pas être trop éloignée de la végétation, de manière à éviter la dispersion des gouttes de liquide phytosanitaire dans l'atmosphère. Par ailleurs, si la rampe est trop proche du terrain, elle risque d'entrer en collision avec le terrain et/ou la végétation, ce qui aurait pour effet d'endommager la rampe de pulvérisation et pourrait boucher des buses de pulvérisation de la rampe.

De manière classique, un engin agricole de pulvérisation est pourvu de vérins pour incliner et monter ou descendre sa rampe de pulvérisation par rapport à son châssis, ce qui permet à la rampe de s'adapter aux variations de la géométrie du terrain. L'utilisateur, lorsque l'engin agricole pulvérise le liquide phytosanitaire sur la végétation, commande manuellement le dévers de la rampe de pulvérisation, c'est-à-dire son inclinaison, et la hauteur de la rampe de pulvérisation, pour qu'elle ne soit ni trop proche ni trop éloignée de la végétation ou du terrain.

Cependant, lorsque l'utilisateur pulvérise le liquide phytosanitaire sur la végétation, la commande manuelle de l'inclinaison et de la hauteur de la rampe est peu aisée car l'utilisateur doit piloter simultanément l'engin, par exemple un tracteur, le long d'une trajectoire. Lorsque la rampe comprend plusieurs bras articulés, le pilotage est encore moins aisé car l'utilisateur commande manuellement la géométrie variable de la rampe, c'est-à-dire l'inclinaison des différents bras. De plus, l'utilisateur cherche toujours à aller le plus vite possible et il ne peut se permettre de diminuer la vitesse de l'engin.

WO 2011/073751 A2 (date de priorité du 18-12-2009 ; date de publication du 23-06-2011) décrit un véhicule agricole pourvu de bras et d'un système entièrement automatisé de montée et de descente de ces bras.

Selon un autre aspect, du fait de l'inertie de la rampe qui reste pendulaire pour ne pas répercuter les irrégularités du terrain sous les roues de l'engin, chaque modification du dévers de la rampe, le cas échéant de sa géométrie variable, entraine un déplacement du centre de gravité et un basculement de la rampe au-delà de l'angle corrigé manuellement par l'utilisateur. Ceci entraine des oscillations, semblables à celles d'un pendule, qui peuvent planter une des extrémités de la rampe dans le terrain. Ces oscillations peuvent, en outre, compliquer et ralentir le juste réglage de la correction de dévers et/ou de géométrie variable de la rampe. Cet inconvénient est également présent dans les systèmes connus de correction de dévers automatique, tel que celui décrit par le document DE-A-41 40 254.

C'est à ces inconvénients qu'entend plus particulièrement remédier l'invention en proposant un engin agricole de pulvérisation et un procédé de pulvérisation permettant une pulvérisation aisée et optimisée, et qui limite les risques de collision entre la rampe et le terrain ou entre la rampe et une végétation plantée sur le terrain.

A cet effet, l'invention est définie à la revendication 1, à la revendication 5 et à la revendication 11.

Grâce à l'invention, lorsqu'un point de la rampe de pulvérisation est trop proche du terrain ou de la végétation, c'est-à-dire à une distance inférieure à une distance minimale de sécurité prédéterminée, l'unité de commande pilote l'organe de montée/descente pour qu'il relève la rampe automatiquement jusqu'à une distance préprogrammée. A l'inverse, l'unité de commande peut aussi piloter l'organe de montée/descente pour qu'il redescende la rampe à une distance préprogrammée, lorsque son point le plus proche de la végétation ou du terrain est plus éloigné de la végétation ou du terrain qu'une distance maximale préprogrammée. Ceci permet à l'utilisateur de commander manuellement l'inclinaison de chaque bras de la rampe, tout en assurant que le point de la rampe qui est le plus proche du terrain ou de la végétation est maintenu automatiquement à une distance qui est, d'une part, au moins égale à la distance minimale de sécurité, ce qui évite les risques de collision entre la rampe et le terrain ou la végétation, et, d'autre part, inférieure à la distance maximale préprogrammée, ce qui évite la dispersion du liquide phytosanitaire dans l'atmosphère.

Des aspects avantageux mais non obligatoires de l'invention sont définis aux revendications 2-4, 6-10 et 12-17.

L'invention sera mieux comprise et d'autres avantages de celle-ci apparaîtront plus clairement à la lumière de la description qui va suivre d'un engin agricole de pulvérisation et d'un procédé de pulvérisation conformes à son principe, donnée uniquement à titre d'exemple et faite en référence aux dessins annexés dans lesquels :
- la figure 1 est une vue arrière d'un engin agricole selon l'invention ;
- la figure 2 est une vue en perspective qui représente schématiquement l'engin de la figure 1 ; et
- la figure 3 est une vue semblable à la figure 1 d'un engin agricole conforme à un deuxième mode de réalisation de l'invention.

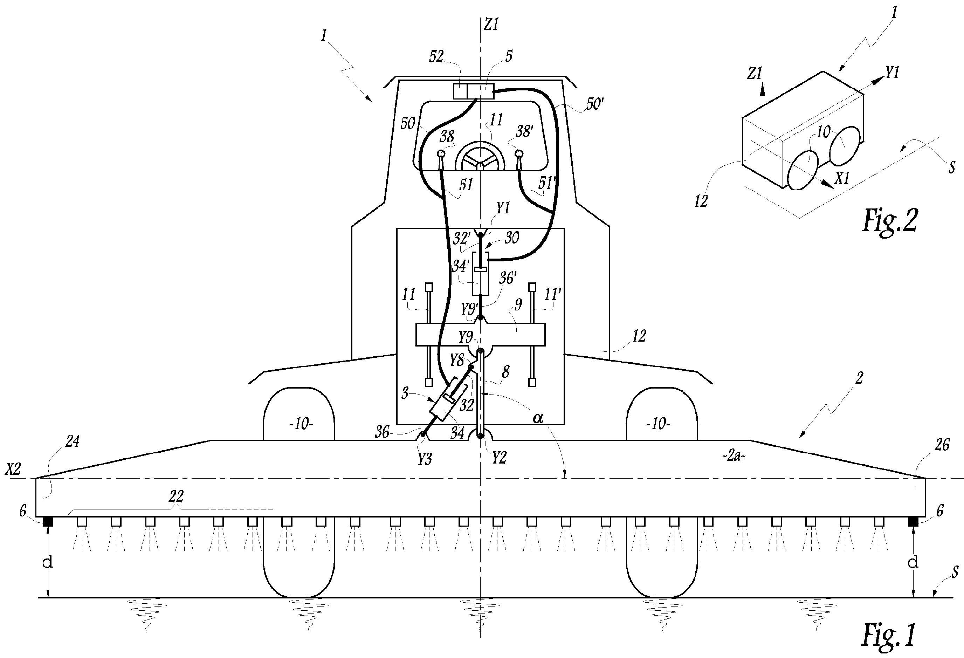

La figure 1 montre un engin agricole 1 de pulvérisation d'un liquide phytosanitaire qui est pourvu d'une rampe de pulvérisation 2 située à l'arrière de l'engin 1. En alternative, la rampe 2 est située à l'avant de l'engin 1. L'engin 1 est également pourvu d'un moteur non représenté qui appartient à des moyens de déplacement de l'engin 1 sur un terrain, avec une transmission, un volant 11 et des roues 10. L'engin 1 est donc automoteur et autonome, mais en alternative la rampe 2 est supportée par une remorque attelée à un engin automoteur quelconque. L'engin 1 est un tracteur, mais d'autres engins peuvent être utilisés.

Comme le montre la figure 2, sur laquelle l'engin 1 est représenté schématiquement, on note X1 un axe transversal de l'engin 1, perpendiculaire à sa direction d'avance en ligne droite, Y1 un axe longitudinal d'un châssis 12 de l'engin 1, parallèle à sa direction d'avance en ligne droite, et Z1 un axe de l'engin 1 perpendiculaire aux axes X1 et Y1. Les axes X1, Y1 et Z1 sont fixes par rapport au châssis 12 de l'engin 1.

Aux figures 1 et 2, l'engin 1 repose sur la surface S d'un terrain plat horizontal dans lequel une végétation, non représentée, peut être cultivée. Le châssis 12 de l'engin 1 est donc horizontal, voire légèrement incliné en hauteur, et l'axe Z1 est alors vertical, voire légèrement incliné sur le côté. L'axe Z1 est donc vertical ou sensiblement vertical. Toutefois, lorsque l'inclinaison de la surface S varie, l'axe Z1 s'incline par rapport à la verticale.

Dans la suite de la description, les éléments qualifiés d'inférieurs sont plus proches de la surface S que les éléments qualifiés de supérieurs.

La rampe 2 comprend un unique bras 2a qui s'étend selon un axe longitudinal X2, sensiblement parallèle à l'axe X1 lorsque l'engin 1 repose sur un terrain plat et horizontal. Des moyens de pulvérisation 22 sont répartis sur la rampe 2, le long de l'axe longitudinal X2, et projettent un liquide phytosanitaire sur la surface S.

En variante non représentée, la rampe 2 peut comprendre plusieurs tronçons articulés entre eux autour d'axes parallèles à l'axe Z1, de sorte qu'il est possible de replier la rampe 2 pour réduire sa longueur, ce qui est avantageux lorsque l'engin 1 circule sur une route étroite.

La rampe 2 est pourvue de deux capteurs 6, un premier capteur 6 étant situé au niveau d'une première extrémité 24 de la rampe 2, et un deuxième capteur 6 étant situé au niveau de l'autre extrémité 26 de la rampe 2. Chaque capteur 6 permet de mesurer une distance d entre ce capteur 6 et la surface S ou, le cas échéant, entre ce capteur 6 et une végétation plantée dans le terrain. Les capteurs 6 et les moyens de pulvérisation 22 sont situés sensiblement dans un même plan perpendiculaire à l'axe Z1. A la figure 1, l'axe longitudinal X2 de la rampe 2 étant parallèle à la surface S, les distances d mesurées par chaque capteur 6 sont identiques.

En variante non représentée, les capteurs 6 et les moyens de pulvérisation 22 sont situés dans un plan légèrement incliné par rapport à un plan perpendiculaire à l'axe Z1. De plus, les capteurs 6 peuvent être décalés selon l'axe Z1 par rapport aux moyens de pulvérisation 22. Dans ce cas, l'unité de commande 5 est informée de ce décalage.

Une bielle 8, parallèle à l'axe Z1 dans la configuration de la figure 1, est articulée en rotation, au niveau de son extrémité inférieure, avec la rampe 2, autour d'un axe Y2 parallèle à l'axe Y1. L'extrémité supérieure de la bielle 8 est articulée en rotation, autour d'un axe Y9 parallèle à l'axe Y1, avec une glissière 9. La glissière 9 est mobile en translation selon l'axe Z1 par rapport au châssis 12 de l'engin 1. Pour ce faire, la glissière 9 coopère avec deux rails 11 et 11' parallèles à l'axe Z1 et qui sont fixés au châssis 12. Les rails 11 et 11' sont situés de part et d'autre de l'axe Z1.

L'engin 1 est pourvu d'un organe d'inclinaison de la rampe 2 dans un plan X1-Z1 perpendiculaire à la direction d'avance Y1 de l'engin 1. Le plan X1-Z1 est parallèle aux axes X1 et Z1. L'organe d'inclinaison permet l'inclinaison de la rampe 2 par rapport au châssis 12 de l'engin 1 et comprend un premier vérin 3 qui peut être hydraulique ou électrique, mais d'autres actionneurs peuvent convenir.

Le premier vérin 3 comprend une tige 32 et un corps 34. La tige 32 comprend une extrémité supérieure, située à l'opposé du corps 34, articulée en rotation avec la bielle 8 autour d'un axe Y8 parallèle à l'axe Y1 et situé à proximité de l'axe Y9. Le corps 34 du premier vérin 3 est relié à la rampe 2 par une barre 36. Une extrémité inférieure de la barre 36, opposée au corps 34 du vérin 3, est articulée en rotation avec la rampe 2 autour d'un axe Y3 parallèle à l'axe Y1. L'axe Y3 est décalé le long de l'axe longitudinal X2 de la rampe 2 par rapport à l'axe Y2. Le vérin 3 permet donc l'inclinaison de la rampe 2 autour de l'axe Y2.

L'engin 1 est également pourvu d'un organe de montée/descente de la rampe 2 selon l'axe Z1. L'organe de montée/descente comprend un deuxième vérin 30 qui peut être hydraulique ou électrique, mais d'autres actionneurs peuvent convenir.

Le deuxième vérin 30 comprend une tige 32' et un corps 34'. La tige 32' comprend une extrémité supérieure qui est située à l'opposé du corps 34' du vérin 30 et qui est articulée en rotation avec l'engin 1 autour de l'axe Y1.

Le corps 34' du deuxième vérin 30 est relié à la glissière 9 par une barre 36'. Une extrémité inférieure de la barre 36', opposée au corps 34' du deuxième vérin 30, est articulée en rotation avec la glissière 9 autour d'un axe Y9' parallèle à l'axe Y1. Les axes Y1, Y2, Y9 et Y9' sont alignés le long de l'axe Z1.

On note α un angle défini entre l'axe Z1 et l'axe longitudinal X2 de la rampe 2 dans un plan perpendiculaire à l'axe Y1. L'angle α est situé, à la figure 1, dans le quadrant supérieur droit. Dans la configuration de la figure 1, l'angle α est égal à 90°.

La translation de la tige 32' du deuxième vérin 30 provoque la translation de la rampe 2 selon l'axe Z1, par l'intermédiaire de la bielle 8 et de la glissière 9, ce qui rapproche ou éloigne la rampe 2 de la surface S.

La translation de la tige 32 du premier vérin 3 provoque l'inclinaison de l'axe longitudinal X2 de la rampe 2 par rapport à l'axe Z1, c'est-à-dire la variation de l'angle α. Autrement dit, le premier vérin 3 permet la rotation de la rampe 2 dans le plan X1-Z1, autour de l'axe Y2.

L'engin 1 est pourvu d'une unité de commande 5 qui comprend une mémoire 52 de stockage d'informations.

Les capteurs 6 sont reliés à l'unité de commande 5 par des liaisons filaires non représentées qui permettent aux capteurs 6 de transmettre à l'unité de commande 5 des informations relatives aux valeurs qu'ils mesurent. En variante, les moyens de liaison entre les capteurs 6 l'unité de commande 5 sont sans fil.

L'engin 1 est pourvu d'un système manuel de commande du premier vérin 3. Ce système manuel de commande comprend, par exemple, une première manette 38 placée dans l'habitacle de l'engin 1 à proximité du volant 11. La première manette 38 est reliée au premier vérin 3 par une première liaison filaire 51.

Le système manuel de commande du premier vérin 3 permet à l'utilisateur de faire varier l'angle α, c'est-à-dire de faire varier l'inclinaison de la rampe 2 dans le plan X1-Z1 par rapport à l'axe Z1, dans le but de la rendre parallèle à la surface S.

De plus, le premier vérin 3 est, de manière facultative, relié à l'unité de commande 5 par une liaison filaire 50 qui permet à l'unité de commande 5 de piloter le premier vérin 3.

De manière à assurer son pilotage, le premier vérin 3 est relié à l'unité de commande 5 et/ou à la manette 38.

Le deuxième vérin 30 est relié à l'unité de commande 5 par une liaison filaire 50' qui permet à l'unité de commande 5 de piloter le deuxième vérin 30.

L'engin 1 est également pourvu d'un système manuel de commande du deuxième vérin 30. Ce système manuel de commande comprend, par exemple, une deuxième manette 38' placée dans l'habitacle de l'engin 1 à proximité du volant 11. La deuxième manette 38' est reliée au deuxième vérin 30 par une liaison filaire 51'.

En variante, les liaisons filaires 50, 50', 51 et 51' sont sans fil.

L'habitacle de l'engin 1 est configuré de sorte que l'utilisateur peut piloter simultanément les moyens de déplacement de l'engin 1, avec le volant 11, et les systèmes manuels de commande du premier vérin 3 et du deuxième vérin 30, c'est-à-dire les manettes 38 et 38'.

La suite de la description concerne un premier procédé de pulvérisation d'un liquide phytosanitaire sur une végétation plantée dans le terrain, au moyen de l'engin 1.

Avant la pulvérisation et dans une étape a1), l'utilisateur entre dans l'unité de commande 5 la valeur d'une distance minimale dₘᵢₙ. La distance minimale dₘᵢₙ peut être comprise entre 30 cm et 70 cm, de préférence de l'ordre de 50 cm.

Lors de la pulvérisation et dans une étape b1), successive à l'étape a1), dès que la distance d mesurée par au moins un capteur 6 est inférieure à la distance minimale dₘᵢₙ prédéterminée à l'étape a1), l'unité de commande 5 pilote rapidement et automatiquement le deuxième vérin 30 pour éloigner la rampe 2 de la surface S jusqu'à ce que la distance d mesurée par ce ou ces capteurs 6 soit égale à la distance minimale dₘᵢₙ prédéterminée à l'étape a1). Le pilotage rapide de la montée de la rampe 2 permet de se prémunir contre les risques de collision entre la rampe 2 et le terrain ou la végétation. Par exemple, l'unité de commande 5 peut piloter le deuxième vérin 30 de sorte que la durée de translation de la tige 32' du deuxième vérin 30 est de l'ordre de quelques secondes.

Ainsi, dès que la rampe 2 est trop proche de la surface S, elle se relève automatiquement. Ceci permet d'éviter que la rampe 2 entre en collision avec le terrain ou, le cas échéant, avec la végétation plantée dans le terrain. De cette manière, la rampe 2 et les moyens de pulvérisation 22 ne risquent pas de s'endommager. Par ailleurs, ceci permet à l'utilisateur de piloter plus sereinement la trajectoire de l'engin 1 tout en commandant manuellement le premier vérin 3 de manière aisée, sans avoir à faire preuve d'une vigilance trop importante quant aux risques de collision.

La suite de la description concerne un deuxième procédé de pulvérisation d'un liquide phytosanitaire sur une végétation plantée dans le terrain, au moyen de l'engin 1.

Dans une étape a2) et avant la pulvérisation, l'utilisateur entre dans l'unité de commande 5 la valeur d'une distance minimale dₘᵢₙ et la valeur d'une distance intermédiaire dᵢₙₜ supérieure à la distance minimale dₘᵢₙ.

La distance intermédiaire dᵢₙₜ peut être comprise entre 50 cm et 100 cm, de préférence de l'ordre de 70 cm.

Puis, lors de la pulvérisation et dans une étape b2), dès que la distance d mesurée par au moins un capteur 6 est inférieure à la distance minimale dₘᵢₙ prédéterminée à l'étape a2), l'unité de commande 5 pilote le deuxième vérin 30 pour éloigner rapidement et automatiquement la rampe 2 de la surface S jusqu'à ce que la distance d mesurée par ce ou ces capteurs 6 soit égale à la distance intermédiaire dᵢₙₜ prédéterminée à l'étape a2).

Par exemple, l'unité de commande 5 peut piloter le deuxième vérin 30 de sorte que la durée de translation de la tige 32' du deuxième vérin 30 est de l'ordre de quelques secondes.

De cette manière, dès que la rampe 2 est trop proche de la surface S, l'unité de commande pilote le deuxième vérin 30 de manière à positionner avantageusement la rampe 2 à la distance intermédiaire dᵢₙₜ, qui correspond à une distance de pulvérisation satisfaisante.

La suite de la description concerne un troisième procédé de pulvérisation d'un liquide phytosanitaire au moyen de l'engin 1.

Dans une étape a3) et avant la pulvérisation, l'utilisateur entre dans l'unité de commande 5 la valeur d'une distance minimale dₘᵢₙ, la valeur d'une distance maximale dₘₐₓ et la valeur d'une distance intermédiaire dᵢₙₜ comprise entre la distance minimale dₘᵢₙ et la distance maximale dₘₐₓ.

La distance maximale dₘₐₓ peut être comprise entre 70 cm et 150 cm, de préférence de l'ordre de 100 cm.

Puis, lors de la pulvérisation et dans une étape b31) postérieure à l'étape a3), dès que la distance d mesurée par au moins un capteur 6 est inférieure à la distance minimale dₘᵢₙ prédéterminée à l'étape a3), l'unité de commande 5 pilote automatiquement et rapidement le deuxième vérin 30 pour éloigner la rampe 2 de la surface S jusqu'à ce que la distance d mesurée par ce ou ces capteurs 6 soit égale à la distance intermédiaire dᵢₙₜ prédéterminée à l'étape a3). Par exemple, l'unité de commande 5 peut piloter le deuxième vérin 30 de sorte que la durée de translation de la tige 32' du deuxième vérin 30 est de l'ordre de quelques secondes.

Ainsi, dès que la rampe 2 est trop proche de la surface S ou de la végétation, l'unité de commande 5 éloigne automatiquement la rampe 2 dans une position intermédiaire de pulvérisation optimale.

Lors de la pulvérisation et dans une étape b32) postérieure à l'étape a3), dès que la distance d mesurée par chaque capteur 6 est supérieure à la distance maximale dₘₐₓ prédéterminée à l'étape a3), l'unité de commande 5 pilote automatiquement le deuxième vérin 30 pour rapprocher la rampe 2 de la surface S, jusqu'à ce que la distance d, mesurée par au moins un des capteurs 6, soit égale à la distance intermédiaire dᵢₙₜ, prédéterminée à l'étape a3).

Ainsi, dès que la rampe 2 est trop éloignée de la surface S ou de la végétation, l'unité de commande 5 rapproche automatiquement la rampe 2 dans une position intermédiaire de pulvérisation optimale.

Les étapes b1), b2) et b31) sont prioritaires par rapport à des étapes facultatives décrites ci-dessous car les étapes b1), b2) et b31) permettent d'éviter la collision de la rampe 2 avec le terrain ou la végétation, ce qui est primordial.

Dans une étape c1) qui est facultative, qui peut être mise en oeuvre pour les premier, deuxième et troisième procédés décrits ci-dessus, et qui est postérieure aux étapes a1), a2) et a3), l'utilisateur utilise le système de commande manuel 38' du deuxième vérin 30 pour rapprocher la rampe 2 de la surface S. Dans ce cas, une fois que les risques de collision ont été évités, c'est-à-dire une fois que l'unité de commande 5 a piloté automatiquement l'organe de montée/descente 30 lors de l'étape b1), b2) ou b31), l'utilisateur rapproche à sa convenance la rampe 2 de la surface S.

A l'inverse, dans l'étape c1) l'utilisateur peut aussi utiliser le système de commande manuel 38' du deuxième vérin 30 pour éloigner la rampe 2 de la surface S ou de la végétation, par exemple s'il anticipe un risque imminent de collision.

L'étape c1) est non prioritaire par rapport aux l'étapes b1), b2) et b31), c'est-à-dire que l'utilisateur ne peut pas utiliser le système manuel de commande 38' du deuxième vérin 30 pour positionner la rampe 2 à une distance d inférieure à dₘᵢₙ. Les étapes b1), b2) et b31) étant prioritaires devant l'étape c1), dès que la distance d mesurée par au moins un capteur 6 est inférieure à dₘᵢₙ, l'unité de commande 5, dans l'étape b1), b2) ou b31), éloigne la rampe 2 de la surface S ou de la végétation pour que la distance d mesurée par le capteur 6 soit, en fonction du procédé, égale ou supérieure à dₘᵢₙ.

Par ailleurs, dans la mesure où la distance d mesurée par chaque capteur 6 reste supérieure ou égale à la distance minimale dₘᵢₙ, la commande manuelle de l'organe d'inclinaison 3 et de l'organe de montée/descente 30, décidée par l'utilisateur, fait effet immédiatement et est prioritaire devant les actions commandées par l'unité de commande 5 autres que les actions des étapes b1), b2) et b31). En effet, les étapes b1), b2) et b31) permettent d'éviter le plantage de la rampe 2 dans le terrain ou la végétation, ce qui est essentiel.

Dans une étape c2) qui est facultative, qui peut être mise en oeuvre dans les premier, deuxième et troisième procédés décrits ci-dessus et qui est postérieure aux étapes a1), a2) et a3), l'unité de commande 5 pilote le premier vérin 3 de manière à positionner la rampe 2 globalement parallèlement à une portion de la surface S située à la verticale de la rampe 2. Par exemple, l'unité de commande peut piloter le premier vérin 3 de sorte que les distances d mesurées par chaque capteur 6 soient globalement égales. L'étape c2) n'est pas prioritaire devant les étapes b1), b2) et b31), c'est-à-dire que dans l'étape c2), lorsque l'unité de commande 5 pilote le premier vérin 3, elle ne peut pas positionner la rampe 2 à une distance d inférieure ou égale à dₘᵢₙ.

De manière avantageuse, dans l'étape c2), l'unité de commande 5 pilote le premier vérin 3 de sorte que la distance d mesurée par un minimum de capteurs 6 soit supérieure à la distance maximale dₘₐₓ.

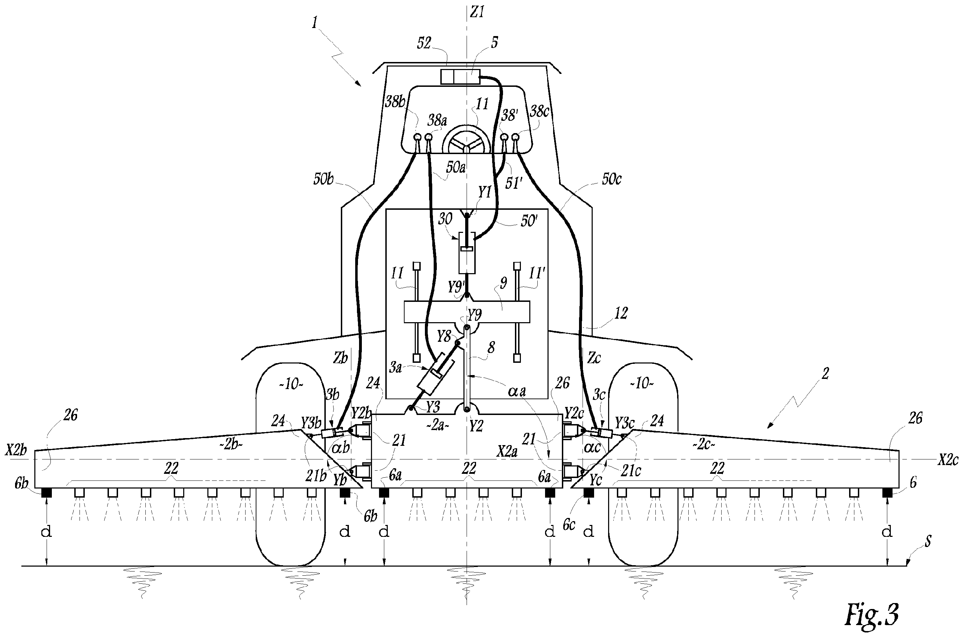

La figure 3 correspond à un deuxième mode de réalisation de l'invention dans lequel l'engin 1 est pourvu d'une rampe 2 de pulvérisation qui comprend trois bras 2a, 2b et 2c articulés. A la figure 3, les éléments semblables à ceux de la figure 1 portent les mêmes références numériques auxquelles est éventuellement ajoutée soit la lettre « a », dans le cas où l'élément concerne le bras 2a, soit la lettre « b », dans le cas où l'élément concerne le bras 2b, soit la lettre « c » dans le cas où l'élément concerne le bras 2c.

Le bras 2a est centré sur l'axe Z1 et est situé entre le premier bras 2b et le deuxième bras 2c. Le bras 2a constitue un « cadre central » pour la rampe 2.

On note X2a un axe longitudinal du cadre central 2a, X2b un axe longitudinal du premier bras 2b et X2c un axe longitudinal du deuxième bras 2c.

Le cadre central 2a de la rampe 2 est relié à l'engin 1 par une structure semblable à celle décrite en référence au premier mode de réalisation. Cette structure comprend un premier vérin 3a, qui correspond au vérin 3 de la figure 1, ainsi qu'une bielle 8, une glissière 9, deux rails 11 et 11' et un deuxième vérin 30, analogues aux éléments portant les mêmes références à la figure 1.

On note αa un angle situé du côté du deuxième bras 2c par rapport à l'axe Z1 et défini dans un plan X2a-Z1, entre les axes X2a et Z1. A la figure 1, l'angle αa est situé dans le quadrant supérieur droit. Le plan X2a-Z1 passe par les axes X2a et Z1 et est perpendiculaire à la direction d'avance Y1 de l'engin 1.

Le premier bras 2b est articulé en rotation avec une première extrémité axiale 24 du cadre central 2a autour d'un axe Yb parallèle à l'axe Y1. Pour ce faire, le cadre central 2a est pourvu d'un élément 21 qui coopère avec un élément 21b, fixé au niveau d'une première extrémité 24 du premier bras 2b, pour former l'articulation. L'engin 1 est pourvu d'un vérin 3b dont une première extrémité est articulée en rotation, autour d'un axe Y3b, avec le bras 2b et dont une deuxième extrémité est articulée en rotation, autour d'un axe Y2b, avec le cadre central 2a. Les axes Y2b et Y3b sont parallèles à l'axe Y1.

On note Zb un premier axe de référence, fixe par rapport au châssis 12 de l'engin 1, parallèle à l'axe Z1. A la figure 3, l'axe Zb est confondu avec les axes Yb et Y2b. Toutefois, lorsque la rampe 2 s'incline, l'axe Zb ne passe plus par les axes Yb et Y2b.

Le deuxième bras 2c est articulé en rotation avec une deuxième extrémité axiale 26 du cadre central 2a autour d'un axe Yc parallèle à l'axe Y1. Pour ce faire, le cadre central 2a est pourvu d'un élément 21 supplémentaire qui coopère avec un élément 21c, fixé au niveau d'une première extrémité 24 du deuxième bras 2c, pour former l'articulation. L'engin 1 est pourvu d'un vérin 3c supplémentaire dont une première extrémité est articulée en rotation, autour d'un axe Y3c, avec le bras 2c et dont une deuxième extrémité est articulée en rotation, autour d'un axe Y2c, avec le cadre central 2a.

On note Zc un second axe de référence, fixe par rapport au châssis 12 de l'engin 1, parallèle à l'axe Z1. A la figure 3, l'axe Zc est confondu avec les axes Yc et Y2c. Toutefois, lorsque la rampe 2 s'incline, l'axe Zc ne passe plus par les axes Yc et Y2c.

La translation de la tige du vérin 3b ou 3c provoque l'inclinaison du bras 2b ou 2c dans le plan X2a-Z1, autour de l'axe Yb ou Yc, par rapport à l'axe de référence Zb ou Zc et donc par rapport à l'axe Z1. Les vérins 3a, 3b et 3c permettent donc d'incliner les bras 2a, 2b et 2c par rapport au châssis 12 de l'engin 1.

On note αb un angle situé du côté du bras 2b par rapport à l'axe Zb et défini dans le plan X2a-Z1, entre les axes Zb et X2b. On note αc un angle situé du côté du bras 2c par rapport à l'axe Zc et défini entre les axes Zc et X2c. Dans la configuration de la figure 3, les angles αa, αb et αc sont égaux à 90°. Les angles αb et αc correspondent à l'inclinaison des bras 2b et 2c dans le plan X2a-Z1, par rapport à l'axe Z1.

Chaque bras 2a, 2b et 2c est pourvu de deux capteurs 6a, 6b ou 6c qui sont situés au niveau de chaque extrémité axiale 24 et 26 des bras 2a, 2b ou 2c et qui mesurent chacun leur propre distance d, comme indiqué à la figure 3.

L'engin 1 est pourvu d'un système manuel de commande des vérins 3a, 3b et 3c qui permet à l'utilisateur de piloter séparément les vérins 3a, 3b et 3c. Ce système manuel de commande comprend une première manette 38a, une deuxième manette 38b et une troisième manette 38c. La première manette 38a est reliée au vérin 3a par une liaison filaire 50a qui permet à l'utilisateur de commander manuellement l'inclinaison du cadre central 2a, c'est-à-dire de faire varier l'angle αa. La deuxième manette 38b est reliée au vérin 3b par une liaison filaire 50b qui permet à l'utilisateur de commander manuellement l'inclinaison du bras 2b, c'est-à-dire de faire varier l'angle αb.

La troisième manette 38c est reliée au vérin 3c par une liaison filaire 50c qui permet à l'utilisateur de commander manuellement l'inclinaison du bras 2c, c'est-à-dire de faire varier l'angle αc.

L'engin 1 est pourvu d'un système manuel de commande 38' du vérin 30 qui comprend une manette 38' reliée au vérin 30 par une liaison filaire 51'.

Les liaisons filaires 50a, 50b, 50c et 51' peuvent être sans fil.

L'engin 1 est pourvu d'une unité de commande 5 qui comprend une mémoire 52 et qui est reliée au vérin 30 par une liaison filaire 50'. Chaque capteur 6a, 6b et 6c est relié à l'unité de commande 5 par des liaisons filaires non représentées. Ces liaisons peuvent également être sans fil.

Le procédé de pulvérisation du liquide phytosanitaire au moyen de l'engin 1 conforme au deuxième mode de réalisation est semblable au procédé décrit en référence au premier mode de réalisation. Toutefois, lors des étapes b1, b2), b31), b32) et c2), les capteurs 6a, 6b et 6c de chaque bras 2a, 2b et 2c sont pris en compte.

En particulier, lors des étapes b1, b2), b31), b32) et c2), l'unité de commande 5 pilote l'organe de montée/descente 30 en fonction des distances mesurées par chaque capteur 6a, 6b et 6c.

Lors de l'étape c1), l'utilisateur peut utiliser le système de commande manuel 38' du vérin 30 dans la mesure où la distance d mesurée par chaque capteur 6a, 6b et 6c est supérieure ou égale à la distance dₘᵢₙ.

Lors de l'étape c2), l'unité de commande 5 pilote au moins un vérin 3a, 3b ou 3c de sorte que le bras 2a, 2b ou 2c associé au vérin 3a, 3b ou 3c est globalement parallèle à une portion de la surface S située à la verticale du bras 2a, 2b ou 2c, dans la mesure où la distance d mesurée par chaque capteur 6a, 6b et 6c est supérieure ou égale à la distance dₘᵢₙ. Par exemple, l'unité de commande 5 peut piloter le vérin 3b et le vérin 3c de sorte que les bras 2b et 2c sont globalement parallèles à des portions de la surface S située à la verticale des bras 2b et 2c, dans la mesure où les distances d mesurées par les capteurs 6b et 6c sont supérieures ou égales à la distance dₘᵢₙ.

Dans d'autre modes de réalisation de l'invention, non représentés, le nombre et le placement des capteurs 6, 6a, 6b et 6c sur la rampe 2 peut varier. Par exemple, dans le cas d'un engin 1 dont la rampe 2 comprend un cadre central 2a et deux bras 2b et 2c situés de part et d'autre du cadre central 2a, comme représenté à la figure 3, le cadre central 2a peut ne comporter qu'un seul capteur 6a central, et les bras 2b et 2c peuvent comporter chacun un seul capteur d'extrémité 6b ou 6c, situé à l'opposé du cadre central 2a.

Par ailleurs, la rampe 2 peut comporter un nombre de bras variable. Par exemple, de chaque côté du cadre central 2a, la rampe 2 peut comporter deux bras articulés l'un à l'autre.

D'autre part, les organes d'inclinaison, de montée/descente et le système d'accroche de la rampe 2 au châssis 12 de l'engin 1 représenté ne sont pas limitatifs, l'invention pouvant être mise en oeuvre pour des engins qui diffèrent des tracteurs représentés sur les figures. Par exemple, l'organe de montée/descente peut être de type à double parallélogramme déformable.

Les systèmes manuels de commande 38, 38a, 38b et 38c des organes d'inclinaison 3, 3a, 3b et 3c sont facultatifs, étant donné que l'unité de commande 5 est apte à piloter les organes d'inclinaison 3, 3a, 3b et 3c. Ainsi, dans un mode de réalisation de l'invention, l'unité de commande 5 pilote à la fois l'organe de montée/descente 3 et chaque organe d'inclinaison 30, sans que l'utilisateur ne commande manuellement ces organes 3 et 30.

En outre, les modes de réalisation représentés ne sont pas limitatifs et leurs caractéristiques peuvent être combinées.

## Revendications

1. Procédé de pulvérisation d'un liquide phytosanitaire sur un terrain cultivé, au moyen d'un engin agricole (1) de pulvérisation d'un liquide phytosanitaire sur un terrain cultivé, comprenant
- des moyens (10, 11) de déplacement de l'engin (1) sur une surface (S) du terrain,
- une rampe de pulvérisation (2) du liquide phytosanitaire comprenant au moins un bras (2a, 2b, 2c),
- un organe d'inclinaison (3, 3a, 3b, 3c) de la rampe (2) et/ou d'au moins un des bras (2a, 2b, 2c) par rapport au châssis (12) de l'engin (1) ,
- un organe de montée/descente (30) de la rampe (2) selon un axe (Z1) fixe par rapport au châssis (12) de l'engin (1) et vertical, voire sensiblement vertical, lorsque l'engin (1) repose sur une surface (S) plane et horizontale et
- une unité de commande (5),
l'engin agricole étant pourvu d'un système manuel de commande (38, 38a, 38b, 38c, 38') de l'organe de montée/descente (30) et/ou d'au moins un organe d'inclinaison (3, 3a, 3b, 3c), un habitacle de l'engin (1) étant configuré de sorte qu'un utilisateur peut piloter simultanément les moyens (10, 11) de déplacement de l'engin (11), avec le volant (11), et le système manuel de commande (38, 38a, 38b, 38c, 38'),
au moins un des bras (2a, 2b, 2c) de la rampe (2) étant pourvu d'au moins deux capteurs (6, 6a, 6b, 6c), chaque capteur (6, 6a, 6b, 6c) mesurant une distance (d) entre la surface (S) du terrain et ce capteur (6, 6a, 6b, 6c) ou, le cas échéant, entre une végétation plantée dans le terrain et ce capteur (6, 6a, 6b, 6c) et
l'unité de commande (5) étant
- reliée à chaque capteur (6, 6a, 6b, 6c),
- pourvue d'une mémoire (52) de stockage des informations (d) fournies par chaque capteur (6, 6a, 6b, 6c) et
- apte à piloter l'organe de montée/descente (30) en fonction des informations (d) stockées dans la mémoire (52),
l'unité de commande (5) étant apte à piloter au moins un organe d'inclinaison (3, 3a, 3b, 3c) en fonction des informations (d) stockées dans la mémoire (52),
le procédé de pulvérisation étant **caractérisé en ce qu'**il comprend des étapes dans lesquelles :
a1) avant la pulvérisation, l'utilisateur entre dans l'unité de commande (5) la valeur d'une distance minimale (dₘᵢₙ),
b1) lors de la pulvérisation, dès que la distance (d) mesurée par au moins un capteur (6, 6a, 6b, 6c) est inférieure à la distance minimale (dₘᵢₙ) prédéterminée à l'étape a1), l'unité de commande (5) pilote l'organe de montée/descente (30) de la rampe (2) pour éloigner rapidement la rampe (2) de la surface (S) jusqu'à ce que la distance (d) mesurée par ce ou ces capteurs (6, 6a, 6b, 6c) soit égale à la distance minimale (dₘᵢₙ) prédéterminée à l'étape a1).

2. Procédé de pulvérisation selon la revendication 1, **caractérisé en ce qu'**il comprend une étape supplémentaire c1), postérieure à l'étape a1) et non prioritaire par rapport à l'étape b1), dans laquelle l'utilisateur utilise le système de commande manuel (38') de l'organe de montée/descente (30) pour éloigner ou rapprocher la rampe (2) de la surface (S) et/ou utilise le système de commande manuel (38, 38a, 38b, 38c) d'au moins un organe d'inclinaison (3, 3a, 3b, 3c) pour incliner au moins un des bras (2, 2a, 2b, 2c).

3. Procédé de pulvérisation selon l'une des revendications 1 ou 2, **caractérisé en ce qu'**il comprend une étape supplémentaire c2), postérieure à l'étape a1) et non prioritaire par rapport à l'étape b1), dans laquelle l'unité de commande (5) pilote au moins un organe d'inclinaison (3, 3a, 3b, 3c) de sorte que chaque bras (2a, 2b, 2c) associé à ce ou ces organes d'inclinaison (3, 3a, 3b, 3c) est globalement parallèle à une portion de la surface (S) située à la verticale de ce bras (2a, 2b, 2c).

4. Procédé de pulvérisation selon l'une des revendications 1 à 3, **caractérisé en ce que** la distance minimale (dₘᵢₙ) est comprise entre 30 cm et 70 cm, de préférence de l'ordre de 50 cm.

5. Procédé de pulvérisation d'un liquide phytosanitaire sur un terrain cultivé, au moyen d'un engin agricole (1) de pulvérisation d'un liquide phytosanitaire sur un terrain cultivé, comprenant
- des moyens (10, 11) de déplacement de l'engin (1) sur une surface (S) du terrain,
- une rampe de pulvérisation (2) du liquide phytosanitaire comprenant au moins un bras (2a, 2b, 2c),
- un organe d'inclinaison (3, 3a, 3b, 3c) de la rampe (2) et/ou d'au moins un des bras (2a, 2b, 2c) par rapport au châssis (12) de l'engin (1) ,
- un organe de montée/descente (30) de la rampe (2) selon un axe (Z1) fixe par rapport au châssis (12) de l'engin (1) et vertical, voire sensiblement vertical, lorsque l'engin (1) repose sur une surface (S) plane et horizontale et
- une unité de commande (5),
l'engin agricole étant pourvu d'un système manuel de commande (38, 38a, 38b, 38c, 38') de l'organe de montée/descente (30) et/ou d'au moins un organe d'inclinaison (3, 3a, 3b, 3c), un habitacle de l'engin (1) étant configuré de sorte qu'un utilisateur peut piloter simultanément les moyens (10, 11) de déplacement de l'engin (11), avec le volant (11), et le système manuel de commande (38, 38a, 38b, 38c, 38'),
au moins un des bras (2a, 2b, 2c) de la rampe (2) étant pourvu d'au moins un capteur (6, 6a, 6b, 6c), chaque capteur (6, 6a, 6b, 6c) mesurant une distance (d) entre la surface (S) du terrain et ce capteur (6, 6a, 6b, 6c) ou, le cas échéant, entre une végétation plantée dans le terrain et ce capteur (6, 6a, 6b, 6c) et
l'unité de commande (5) étant
- reliée à chaque capteur (6, 6a, 6b, 6c),
- pourvue d'une mémoire (52) de stockage des informations (d) fournies par chaque capteur (6, 6a, 6b, 6c) et
- apte à piloter l'organe de montée/descente (30) en fonction des informations (d) stockées dans la mémoire (52),
le procédé étant **caractérisé en ce qu'**il comprend des étapes dans lesquelles :
a2) avant la pulvérisation, l'utilisateur entre dans l'unité de commande (5) la valeur d'une distance minimale (dₘᵢₙ) et la valeur d'une distance intermédiaire (dᵢₙₜ) supérieure à la distance minimale (dₘᵢₙ),
b2) lors de la pulvérisation, dès que la distance (d) mesurée par au moins un capteur (6, 6a, 6b, 6c) est inférieure à la distance minimale (dₘᵢₙ) prédéterminée à l'étape a2), l'unité de commande (5) pilote l'organe de montée/descente (30) de la rampe (2) pour éloigner rapidement la rampe (2) de la surface (S) jusqu'à ce que la distance (d) mesurée par ce ou ces capteurs (6, 6a, 6b, 6c) soit égale à la distance intermédiaire (dᵢₙₜ) prédéterminée à l'étape a2).

6. Procédé de pulvérisation selon la revendication 5, **caractérisé en ce qu'**il comprend une étape supplémentaire c1), postérieure à l'étape a2) et non prioritaire par rapport à l'étape b2), dans laquelle l'utilisateur utilise le système de commande manuel (38') de l'organe de montée/descente (30) pour éloigner ou rapprocher la rampe (2) de la surface (S) et/ou utilise le système de commande manuel (38, 38a, 38b, 38c) d'au moins un organe d'inclinaison (3, 3a, 3b, 3c) pour incliner au moins un des bras (2, 2a, 2b, 2c).

7. Procédé de pulvérisation selon l'une des revendications 5 ou 6, **caractérisé en ce que** l'unité de commande (5) est apte à piloter au moins un organe d'inclinaison (3, 3a, 3b, 3c) en fonction des informations (d) stockées dans la mémoire (52), et **en ce que** le procédé comprend une étape supplémentaire c2), postérieure à l'étape a2) et non prioritaire par rapport à l'étape b2), dans laquelle l'unité de commande (5) pilote au moins un organe d'inclinaison (3, 3a, 3b, 3c) de sorte que chaque bras (2a, 2b, 2c) associé à ce ou ces organes d'inclinaison (3, 3a, 3b, 3c) est globalement parallèle à une portion de la surface (S) située à la verticale de ce bras (2a, 2b, 2c).

8. Procédé de pulvérisation selon l'une des revendications 5 à 7, **caractérisé en ce que** la distance minimale (dₘᵢₙ) est comprise entre 30 cm et 70 cm, de préférence de l'ordre de 50 cm.

9. Procédé de pulvérisation selon l'une des revendications 5 à 8, **caractérisé en ce que** la distance intermédiaire (dᵢₙₜ) est comprise entre 50 cm et 100 cm, de préférence de l'ordre de 70 cm.

10. Procédé de pulvérisation selon l'une quelconque des revendications 5 à 9, **caractérisé en ce qu'**au moins un des bras (2a, 2b, 2c) de la rampe (2) est équipé d'au moins deux capteurs (6, 6a, 6b, 6c).

11. Procédé de pulvérisation d'un liquide phytosanitaire sur un terrain cultivé, au moyen d'un engin agricole (1) de pulvérisation d'un liquide phytosanitaire sur un terrain cultivé, comprenant
- des moyens (10, 11) de déplacement de l'engin (1) sur une surface (S) du terrain,
- une rampe de pulvérisation (2) du liquide phytosanitaire comprenant au moins un bras (2a, 2b, 2c),
- un organe d'inclinaison (3, 3a, 3b, 3c) de la rampe (2) et/ou d'au moins un des bras (2a, 2b, 2c) par rapport au châssis (12) de l'engin (1) ,
- un organe de montée/descente (30) de la rampe (2) selon un axe (Z1) fixe par rapport au châssis (12) de l'engin (1) et vertical, voire sensiblement vertical, lorsque l'engin (1) repose sur une surface (S) plane et horizontale et
- une unité de commande (5),
l'engin agricole étant pourvu d'un système manuel de commande (38, 38a, 38b, 38c, 38') de l'organe de montée/descente (30) et/ou d'au moins un organe d'inclinaison (3, 3a, 3b, 3c), un habitacle de l'engin (1) étant configuré de sorte qu'un utilisateur peut piloter simultanément les moyens (10, 11) de déplacement de l'engin (11), avec le volant (11), et le système manuel de commande (38, 38a, 38b, 38c, 38'),
au moins un des bras (2a, 2b, 2c) de la rampe (2) étant pourvu d'au moins un capteur (6, 6a, 6b, 6c), chaque capteur (6, 6a, 6b, 6c) mesurant une distance (d) entre la surface (S) du terrain et ce capteur (6, 6a, 6b, 6c) ou, le cas échéant, entre une végétation plantée dans le terrain et ce capteur (6, 6a, 6b, 6c) et
l'unité de commande (5) étant
- reliée à chaque capteur (6, 6a, 6b, 6c),
- pourvue d'une mémoire (52) de stockage des informations (d) fournies par chaque capteur (6, 6a, 6b, 6c) et
- apte à piloter l'organe de montée/descente (30) en fonction des informations (d) stockées dans la mémoire (52),
le procédé étant **caractérisé en ce qu'**il comprend des étapes dans lesquelles :
a3) avant la pulvérisation, l'utilisateur entre dans l'unité de commande (5) la valeur d'une distance minimale (dₘᵢₙ), la valeur d'une distance maximale (dₘₐₓ) et la valeur d'une distance intermédiaire (dᵢₙₜ) comprise entre la distance minimale (dₘᵢₙ) et la distance maximale (dₘₐₓ),
b31) lors de la pulvérisation, dès que la distance mesurée par au moins un capteur (6, 6a, 6b, 6c) est inférieure à la distance minimale (dₘᵢₙ) prédéterminée à l'étape a3), l'unité de commande (5) pilote l'organe (30) de montée/descente de la rampe (2) pour éloigner rapidement la rampe (2) de la surface (S) jusqu'à ce que la distance (d) mesurée par ce ou ces capteurs (6, 6a, 6b) soit égale à la distance intermédiaire (dᵢₙₜ) prédéterminée à l'étape a3),
b32) lors de la pulvérisation, dès que la distance (d) mesurée par chaque capteur (6, 6a, 6b, 6c) est supérieure à la distance maximale (dₘₐₓ) prédéterminée à l'étape a3), l'unité de commande (5) pilote l'organe de montée/descente (30) de la rampe (2) pour rapprocher la rampe (2) de la surface (S) jusqu'à ce que la distance (d) mesurée par au moins un capteur (6, 6a, 6b, 6c) soit égale à la distance intermédiaire (dᵢₙₜ) prédéterminée à l'étape a3).

12. Procédé de pulvérisation selon la revendication 11, **caractérisé en ce qu'**il comprend une étape supplémentaire c1), postérieure à l'étape a3) et non prioritaire par rapport à l'étape b31), dans laquelle l'utilisateur utilise le système de commande manuel (38') de l'organe de montée/descente (30) pour éloigner ou rapprocher la rampe (2) de la surface (S) et/ou utilise le système de commande manuel (38, 38a, 38b, 38c) d'au moins un organe d'inclinaison (3, 3a, 3b, 3c) pour incliner au moins un des bras (2, 2a, 2b, 2c).

13. Procédé de pulvérisation selon l'une des revendications 11 ou 12, **caractérisé en ce que** l'unité de commande (5) est apte à piloter au moins un organe d'inclinaison (3, 3a, 3b, 3c) en fonction des informations (d) stockées dans la mémoire (52), et **en ce que** le procédé comprend une étape supplémentaire c2), postérieure à l'étape a3) et non prioritaire par rapport à l'étape b31), dans laquelle l'unité de commande (5) pilote au moins un organe d'inclinaison (3, 3a, 3b, 3c) de sorte que chaque bras (2a, 2b, 2c) associé à ce ou ces organes d'inclinaison (3, 3a, 3b, 3c) est globalement parallèle à une portion de la surface (S) située à la verticale de ce bras (2a, 2b, 2c).

14. Procédé de pulvérisation selon l'une des revendications 11 à 13, **caractérisé en ce que** la distance minimale (dₘᵢₙ) est comprise entre 30 cm et 70 cm, de préférence de l'ordre de 50 cm.

15. Procédé de pulvérisation selon l'une des revendications 11 à 14, **caractérisé en ce que** la distance maximale (dₘₐₓ) est comprise entre 70 cm et 150 cm, de préférence de l'ordre de 100 cm.

16. Procédé de pulvérisation selon l'une des revendications 11 à 15, **caractérisé en ce que** la distance intermédiaire (dᵢₙₜ) est comprise entre 50 cm et 100 cm, de préférence de l'ordre de 70 cm.

17. Procédé de pulvérisation selon l'une quelconque des revendications 11 à 16, **caractérisé en ce qu'**au moins un des bras (2a, 2b, 2c) de la rampe (2) est équipé d'au moins deux capteurs (6, 6a, 6b, 6c).

## Patentansprüche

1. Sprühverfahren eines Kulturlandes mit einer Pflanzenschutzflüssigkeit auf einem Anbaugelände mittels einer landwirtschaftlichen Maschine (1) zum Sprühen einer Pflanzenschutzflüssigkeit auf ein Anbaugelände, umfassend
- Einrichtungen (10, 11) zum Verlagern der Maschine (1) auf einer Fläche (S) des Geländes,
- einen Sprühbalken (2) der Pflanzenschutzflüssigkeit, umfassend mindestens einen Arm (2a, 2b, 2c),
- ein Neigungsorgan (3, 3a, 3b, 3c) des Balkens (2) und/oder mindestens eines der Arme (2a, 2b, 2c) in Bezug auf das Chassis (12) der Maschine (1),
- ein Anhebe-/Absenkorgan (30) der Balken (2) gemäß einer Achse (Z1), die in Bezug auf das Chassis (12) der Maschine (1) feststehend ist und vertikal, d. h. im Wesentlichen vertikal ist, wenn die Maschine (1) auf einer ebenen und horizontalen Fläche (S) ruht, und
- eine Steuereinheit (5),
wobei die landwirtschaftliche Maschine mit einem manuellen Steuersystem (38, 38a, 38b, 38c, 38') des Anhebe-/Absenkorgans (30) und/oder mindestens eines Neigungsorgans (3, 3a, 3b, 3c) versehen ist, wobei ein Innenraum der Maschine (1) konfiguriert ist, damit ein Benutzer gleichzeitig die Einrichtungen (10, 11) zum Verlagern der Maschine (11) mit dem Lenkrad (11) und dem manuellen Steuersystem (38, 38a, 38b, 38c, 38') steuern kann,
wobei mindestens einer der Arme (2a, 2b, 2c) des Balkens (2) mit mindestens zwei Sensoren (6, 6a, 6b, 6c) versehen ist, wobei jeder Sensor (6, 6a, 6b, 6c) einen Abstand (d) zwischen der Oberfläche (S) des Geländes und diesem Sensor (6, 6a, 6b, 6c) oder gegebenenfalls zwischen einer auf dem Gelände gepflanzten Vegetation und diesem Sensor (6, 6a, 6b, 6c) misst, und
wobei die Steuereinheit (5)
- mit jedem Sensor (6, 6a, 6b, 6c) verbunden ist,
- mit einem Speicher (52) zum Speichern von Informationen (d) versehen ist, die von jedem Sensor (6, 6a, 6b, 6c) geliefert werden, und
- geeignet ist, um das Anhebe-/Absenkorgan (30) abhängig von den in dem Speicher (52) gespeicherten Informationen (d) zu steuern,
wobei die Steuereinheit (5) geeignet ist, um abhängig von den in dem Speicher (52) gespeicherten Informationen (d) mindestens ein Neigungsorgan (3, 3a, 3b, 3c) zu steuern,
wobei das Sprühverfahren **dadurch gekennzeichnet ist, dass** es Schritte umfasst, in denen:
a1) der Benutzer vor dem Sprühen den Wert eines minimalen Abstands (dₘᵢₙ) in die Steuereinheit (5) eingibt,
b1) beim Sprühen, sobald der von mindestens einem Sensor (6, 6a, 6b, 6c) gemessene Abstand (d) kleiner ist als der in Schritt a1) vorbestimmte minimale Abstand (dₘᵢₙ), die Steuereinheit (5) das Anhebe-/Absenkorgan (30) des Balkens (2) steuert, um den Balken (2) schnell von der Oberfläche (S) wegzubewegen, bis der von diesem oder diesen Sensoren (6, 6a, 6b, 6c) gemessene Abstand (d) gleich ist wie der in Schritt a1) vorbestimmte minimale Abstand (dₘᵢₙ).

2. Sprühverfahren nach Anspruch 1, **dadurch gekennzeichnet, dass** es nach Schritt a1) und in Bezug auf Schritt b1) nicht vorrangig einen zusätzlichen Schritt c1) umfasst, bei dem der Benutzer das manuelle Steuersystem (38') des Anhebe-/Absenkorgans (30) verwendet, um den Balken (2) von der Oberfläche (S) weg oder zu dieser hin zu bewegen, und/oder das manuelle Steuersystem (38, 38a, 38b, 38c) von mindestens einem Neigungsorgan (3, 3a, 3b, 3c) verwendet, um mindestens einen der Arme (2, 2a, 2b, 2c) zu neigen.

3. Sprühverfahren nach einem der Ansprüche 1 oder 2, **dadurch gekennzeichnet, dass** es nach Schritt a1) erfolgt und in Bezug auf Schritt b1) nicht vorrangig einen zusätzlichen Schritt c2) umfasst, bei dem die Steuereinheit (5) mindestens ein Neigungsorgan (3, 3a, 3b, 3c) steuert, sodass jeder Arm (2a, 2b, 2c), der mit diesem oder diesen Neigungsorganen (3, 3a, 3b, 3c) verbunden ist, im Wesentlichen parallel zu einem Abschnitt der Oberfläche (S) ist, der sich vertikal zu diesem Arm (2a, 2b, 2c) befindet.

4. Sprühverfahren nach einem der Ansprüche 1 bis 3, **dadurch gekennzeichnet, dass** der minimale Abstand (dₘᵢₙ) zwischen 30 cm und 70 cm, vorzugsweise in der Größenordnung von 50 cm, ist.

5. Sprühverfahren eines Kulturlandes mit einer Pflanzenschutzflüssigkeit auf einem Anbaugelände mittels einer landwirtschaftlichen Maschine (1) zum Sprühen einer Pflanzenschutzflüssigkeit auf ein Anbaugelände, umfassend
- Einrichtungen (10, 11) zum Verlagern der Maschine (1) auf einer Fläche (S) des Geländes,
- einen Sprühbalken (2) der Pflanzenschutzflüssigkeit, umfassend mindestens einen Arm (2a, 2b, 2c),
- ein Neigungsorgan (3, 3a, 3b, 3c) des Balkens (2) und/oder mindestens eines der Arme (2a, 2b, 2c) in Bezug auf das Chassis (12) der Maschine (1),
- ein Anhebe-/Absenkorgan (30) der Balken (2) gemäß einer Achse (Z1), die in Bezug auf das Chassis (12) der Maschine (1) feststehend ist und vertikal, d. h. im Wesentlichen vertikal ist, wenn die Maschine (1) auf einer ebenen und horizontalen Fläche (S) ruht, und
- eine Steuereinheit (5),
wobei die landwirtschaftliche Maschine mit einem manuellen Steuersystem (38, 38a, 38b, 38c, 38') des Anhebe-/Absenkorgans (30) und/oder mindestens eines Neigungsorgans (3, 3a, 3b, 3c) versehen ist, wobei ein Innenraum der Maschine (1) konfiguriert ist, damit ein Benutzer gleichzeitig die Einrichtungen (10, 11) zum Verlagern der Maschine (11) mit dem Lenkrad (11) und dem manuellen Steuersystem (38, 38a, 38b, 38c, 38') steuern kann,
wobei mindestens einer der Arme (2a, 2b, 2c) des Balkens (2) mit mindestens einem Sensor (6, 6a, 6b, 6c) versehen ist, wobei jeder Sensor (6, 6a, 6b, 6c) einen Abstand (d) zwischen der Oberfläche (S) des Geländes und diesem Sensor (6, 6a, 6b, 6c) oder gegebenenfalls zwischen einer auf dem Gelände gepflanzten Vegetation und diesem Sensor (6, 6a, 6b, 6c) misst, und
wobei die Steuereinheit (5)
- mit jedem Sensor (6, 6a, 6b, 6c) verbunden ist,
- mit einem Speicher (52) zum Speichern von Informationen (d) versehen ist, die von jedem Sensor (6, 6a, 6b, 6c) geliefert werden, und
- geeignet ist, um das Anhebe-/Absenkorgan (30) abhängig von den in dem Speicher (52) gespeicherten Informationen (d) zu steuern,
wobei das Verfahren **dadurch gekennzeichnet ist, dass** es Schritte umfasst, in denen:
a2) vor dem Sprühen der Benutzer den Wert eines minimalen Abstands (dₘᵢₙ) und den Wert eines Zwischenabstands (dᵢₙₜ), der größer als der minimale Abstand (dₘᵢₙ) ist, in die Steuereinheit (5) eingibt,
b2) beim Sprühen, sobald der von mindestens einem Sensor (6, 6a, 6b, 6c) gemessene Abstand (d) kleiner ist als der in Schritt a2) vorbestimmte minimale Abstand (dₘᵢₙ), die Steuereinheit (5) das Anhebe-/Absenkorgan (30) des Balkens (2) steuert, um den Balken (2) schnell von der Oberfläche (S) wegzubewegen, bis der von diesem oder diesen Sensoren (6, 6a, 6b, 6c) gemessene Abstand (d) gleich ist wie der in Schritt a2) vorbestimmte Zwischenabstand (dᵢₙₜ).

6. Sprühverfahren nach Anspruch 5, **dadurch gekennzeichnet, dass** es nach Schritt a2) und in Bezug auf Schritt b2) nicht vorrangig einen zusätzlichen Schritt c1) umfasst, bei dem der Benutzer das manuelle Steuersystem (38') des Anhebe-/Absenkorgans (30) verwendet, um den Balken (2) von der Oberfläche (S) weg oder zu dieser hin zu bewegen, und/oder das manuelle Steuersystem (38, 38a, 38b, 38c) von mindestens einem Neigungsorgan (3, 3a, 3b, 3c) verwendet, um mindestens einen der Arme (2, 2a, 2b, 2c) zu neigen.

7. Sprühverfahren nach einem der Ansprüche 5 oder 6, **dadurch gekennzeichnet, dass** die Steuereinheit (5) in der Lage ist, mindestens ein Neigungsorgan (3, 3a, 3b, 3c) abhängig von den im Speicher (52) gespeicherten Informationen (d) zu steuern, und dass das Verfahren nach Schritt a2) und in Bezug auf Schritt b2) nicht vorrangig einen zusätzlichen Schritt c2) umfasst, bei dem die Steuereinheit (5) mindestens ein Neigungsorgan (3, 3a, 3b, 3c) steuert, sodass jeder Arm (2a, 2b, 2c), der mit diesem oder diesen Neigungsorganen (3, 3a, 3b, 3c) verbunden ist, im Wesentlichen parallel zu einem Abschnitt der Oberfläche (S) ist, der sich vertikal zu diesem Arm (2a, 2b, 2c) befindet.

8. Sprühverfahren nach einem der Ansprüche 5 bis 7, **dadurch gekennzeichnet, dass** der minimale Abstand (dₘᵢₙ) zwischen 30 cm und 70 cm, vorzugsweise in der Größenordnung von 50 cm, ist.

9. Sprühverfahren nach einem der Ansprüche 5 bis 8, **dadurch gekennzeichnet, dass** der Zwischenabstand (dᵢₙₜ) zwischen 50 cm und 100 cm, vorzugsweise in der Größenordnung von 70 cm, ist.

10. Sprühverfahren nach einem der Ansprüche 5 bis 9, **dadurch gekennzeichnet, dass** mindestens einer der Arme (2a, 2b, 2c) des Balkens (2) mit mindestens zwei Sensoren (6, 6a, 6b, 6c) ausgestattet ist.

11. Sprühverfahren eines Kulturlandes mit einer Pflanzenschutzflüssigkeit auf einem Anbaugelände mittels einer landwirtschaftlichen Maschine (1) zum Sprühen einer Pflanzenschutzflüssigkeit auf ein Anbaugelände, umfassend
- Einrichtungen (10, 11) zum Verlagern der Maschine (1) auf einer Fläche (S) des Geländes,
- einen Sprühbalken (2) der Pflanzenschutzflüssigkeit, umfassend mindestens einen Arm (2a, 2b, 2c),
- ein Neigungsorgan (3, 3a, 3b, 3c) des Balkens (2) und/oder mindestens eines der Arme (2a, 2b, 2c) in Bezug auf das Chassis (12) der Maschine (1),
- ein Anhebe-/Absenkorgan (30) der Balken (2) gemäß einer Achse (Z1), die in Bezug auf das Chassis (12) der Maschine (1) feststehend ist und vertikal, d. h. im Wesentlichen vertikal ist, wenn die Maschine (1) auf einer ebenen und horizontalen Fläche (S) ruht, und
- eine Steuereinheit (5),
wobei die landwirtschaftliche Maschine mit einem manuellen Steuersystem (38, 38a, 38b, 38c, 38') des Anhebe-/Absenkorgans (30) und/oder mindestens eines Neigungsorgans (3, 3a, 3b, 3c) versehen ist, wobei ein Innenraum der Maschine (1) konfiguriert ist, damit ein Benutzer gleichzeitig die Einrichtungen (10, 11) zum Verlagern der Maschine (11) mit dem Lenkrad (11) und dem manuellen Steuersystem (38, 38a, 38b, 38c, 38') steuern kann,
wobei mindestens einer der Arme (2a, 2b, 2c) des Balkens (2) mit mindestens einem Sensor (6, 6a, 6b, 6c) versehen ist, wobei jeder Sensor (6, 6a, 6b, 6c) einen Abstand (d) zwischen der Oberfläche (S) des Geländes und diesem Sensor (6, 6a, 6b, 6c) oder gegebenenfalls zwischen einer auf dem Gelände gepflanzten Vegetation und diesem Sensor (6, 6a, 6b, 6c) misst, und
wobei die Steuereinheit (5)
- mit jedem Sensor (6, 6a, 6b, 6c) verbunden ist,
- mit einem Speicher (52) zum Speichern von Informationen (d) versehen ist, die von jedem Sensor (6, 6a, 6b, 6c) geliefert werden, und
- geeignet ist, um das Anhebe-/Absenkorgan (30) abhängig von den in dem Speicher (52) gespeicherten Informationen (d) zu steuern,
wobei das Verfahren **dadurch gekennzeichnet ist, dass** es Schritte umfasst, in denen:
a3) vor dem Sprühen der Benutzer den Wert eines minimalen Abstands (dₘᵢₙ), den Wert eines maximalen Abstands (dₘₐₓ) und den Wert eines Zwischenabstands (dᵢₙₜ) zwischen dem minimalen Abstand (dₘᵢₙ) und dem maximalen Abstand (dₘₐₓ) in die Steuereinheit (5) eingibt,
b31) beim Sprühen, sobald der von mindestens einem Sensor (6, 6a, 6b, 6c) gemessene Abstand (d) kleiner ist als der in Schritt a3) vorbestimmte minimale Abstand (dₘᵢₙ), die Steuereinheit (5) das Anhebe-/Absenkorgan (30) des Balkens (2) steuert, um den Balken (2) schnell von der Oberfläche (S) wegzubewegen, bis der von diesem oder diesen Sensoren (6, 6a, 6b) gemessene Abstand (d) gleich ist wie der in Schritt a3) vorbestimmte Zwischenabstand (dᵢₙₜ).
b32) beim Sprühen, sobald der von jedem Sensor (6, 6a, 6b, 6c) gemessene Abstand (d) größer ist als der in Schritt a3) vorbestimmte maximale Abstand (dₘₐₓ), die Steuereinheit (5) das Anhebe-/Absenkorgan (30) des Balkens (2) steuert, um den Balken (2) näher an die Oberfläche (S) zu bringen, bis der von mindestens einem Sensor (6, 6a, 6b, 6c) gemessene Abstand (d) gleich ist wie der in Schritt a3) vorbestimmte Zwischenabstand (dᵢₙₜ).

12. Sprühverfahren nach Anspruch 11, **dadurch gekennzeichnet, dass** es nach Schritt a3) und in Bezug auf Schritt b31) nicht vorrangig einen zusätzlichen Schritt c1) umfasst, bei dem der Benutzer das manuelle Steuersystem (38') des Anhebe-/Absenkorgans (30) verwendet, um den Balken (2) von der Oberfläche (S) weg oder zu dieser hin zu bewegen, und/oder das manuelle Steuersystem (38, 38a, 38b, 38c) von mindestens einem Neigungsorgan (3, 3a, 3b, 3c) verwendet, um mindestens einen der Arme (2, 2a, 2b, 2c) zu neigen.

13. Sprühverfahren nach einem der Ansprüche 11 oder 12, **dadurch gekennzeichnet, dass** die Steuereinheit (5) in der Lage ist, mindestens ein Neigungsorgan (3, 3a, 3b, 3c) abhängig von den im Speicher (52) gespeicherten Informationen (d) zu steuern, und dass das Verfahren nach Schritt a3) und in Bezug auf Schritt b31) nicht vorrangig einen zusätzlichen Schritt c2) umfasst, bei dem die Steuereinheit (5) mindestens ein Neigungsorgan (3, 3a, 3b, 3c) steuert, sodass jeder Arm (2a, 2b, 2c), der mit diesem oder diesen Neigungsorganen (3, 3a, 3b, 3c) verbunden ist, im Wesentlichen parallel zu einem Abschnitt der Oberfläche (S) ist, der sich vertikal zu diesem Arm (2a, 2b, 2c) befindet.

14. Sprühverfahren nach einem der Ansprüche 11 bis 13, **dadurch gekennzeichnet, dass** der minimale Abstand (dₘᵢₙ) zwischen 30 cm und 70 cm, vorzugsweise in der Größenordnung von 50 cm, ist.

15. Sprühverfahren nach einem der Ansprüche 11 bis 14, **dadurch gekennzeichnet, dass** der maximale Abstand (dₘₐₓ) zwischen 70 cm und 150 cm, vorzugsweise in der Größenordnung von 100 cm, ist.

16. Sprühverfahren nach einem der Ansprüche 11 bis 15, **dadurch gekennzeichnet, dass** der Zwischenabstand (dᵢₙₜ) zwischen 50 cm und 100 cm, vorzugsweise in der Größenordnung von 70 cm, ist.

17. Sprühverfahren nach einem der Ansprüche 11 bis 16, **dadurch gekennzeichnet, dass** mindestens einer der Arme (2a, 2b, 2c) des Balkens (2) mit mindestens zwei Sensoren (6, 6a, 6b, 6c) ausgestattet ist.

## Claims

1. A method of spraying a phytosanitary liquid on a cultivated area by means of an agricultural machine (1) for spraying a phytosanitary liquid on a cultivated area, comprising
- means (10, 11) for moving the machine (1) over a surface (S) of the ground,
- a spray boom (2) for spraying the phytosanitary liquid comprising at least one arm (2a, 2b, 2c),
- a mechanism (3, 3a, 3b, 3c) for tilting the boom (2) and/or at least one of the arms (2a, 2b, 2c) with respect to the chassis (12) of the machine (1),
- a mechanism (30) for raising/lowering the boom (2) along an axis (Z1) that is fixed with respect to the chassis (12) of the machine (1) and vertical, or even substantially vertical, when the machine (1) is resting on a flat, horizontal surface (S), and
- a control unit (5),
the agricultural machine being provided with a manual control system (38, 38a, 38b, 38c, 38') for the raising/lowering mechanism (30) and/or at least one tilting mechanism (3, 3a, 3b, 3c), a cabin of the machine (1) being configured in such a way that a user can simultaneously operate the means (10, 11) for moving the machine (11), with the steering wheel (11) and the manual control system (38, 38a, 38b, 38c, 38'),
at least one of the arms (2a, 2b, 2c) of the boom (2) being provided with at least two sensors (6, 6a, 6b, 6c), each sensor (6, 6a, 6b, 6c) measuring a distance (d) between the surface (S) of the ground and this sensor (6, 6a, 6b, 6c) or, if applicable, between vegetation planted in the ground and that sensor (6, 6a, 6b, 6c) and
the control unit (5) being
- connected to each sensor (6, 6a, 6b, 6c),
- provided with a memory (52) for storing the information (d) provided by each sensor (6, 6a, 6b, 6c) and
- able to control the raising/lowering mechanism (30) according to the information (d) stored in the memory (52),
the control unit (5) being able to control at least one tilting mechanism (3, 3a, 3b, 3c) as a function of the information (d) stored in the memory (52),
the spraying method being **characterised in that** it comprises steps in which:
a1) before spraying, the user enters the value of a minimum distance (dₘᵢₙ) into the control unit 5,
b1) during spraying, as soon as the distance (d) measured by at least one sensor (6, 6a, 6b, 6c) is less than the minimum distance (dₘᵢₙ) predetermined in step a1), the control unit (5) actuates the raising/lowering mechanism (30) of the boom (2) to rapidly move the boom (2) away from the surface (S) until the distance (d) measured by said sensor(s) (6, 6a, 6b, 6c) is equal to the minimum distance (dₘᵢₙ) predetermined in step a1).

2. The spraying method according to claim 1, **characterised in that** it comprises an additional step c1), subsequent to step a1) and not taking priority over step b1), in which the user uses the manual control system (38') of the raising/lowering mechanism (30) to move the boom (2) away from or towards the surface (S) and/or uses the manual control system (38, 38a, 38b, 38c) of at least one tilting mechanism (3, 3a, 3b, 3c) to tilt at least one of the arms (2, 2a, 2b, 2c).

3. The spraying method according to one of claims 1 or 2, **characterised in that** it comprises an additional step c2), subsequent to step a1) and not taking priority over step b1), in which the control unit (5) actuates at least one tilting mechanism (3, 3a, 3b, 3c) so that each arm (2a, 2b, 2c) associated with said tilting mechanism(s) (3, 3a, 3b, 3c) is generally parallel to a portion of the surface (S) situated vertically to that arm (2a, 2b, 2c).

4. The spraying method according to one of claims 1 to 3, **characterised in that** the minimum distance (dₘᵢₙ) is between 30 cm and 70 cm, preferably on the order of 50 cm.

5. A method of spraying a phytosanitary liquid on a cultivated area by means of an agricultural machine (1) for spraying a phytosanitary liquid on a cultivated area, comprising
- means (10, 11) for moving the machine (1) over a surface (S) of the ground,
- a spray boom (2) for spraying the phytosanitary liquid comprising at least one arm (2a, 2b, 2c),
- a mechanism (3, 3a, 3b, 3c) for tilting the boom (2) and/or at least one of the arms (2a, 2b, 2c) with respect to the chassis (12) of the machine (1),
- a mechanism (30) for raising/lowering the boom (2) along an axis (Z1) that is fixed with respect to the chassis (12) of the machine (1) and vertical, or even substantially vertical, when the machine (1) is resting on a flat, horizontal surface (S), and
- a control unit (5),
the agricultural machine being provided with a manual control system (38, 38a, 38b, 38c, 38') for the raising/lowering mechanism (30) and/or at least one tilting mechanism (3, 3a, 3b, 3c), a cabin of the machine (1) being configured in such a way that a user can simultaneously operate the means (10, 11) for moving the machine (11), with the steering wheel (11) and the manual control system (38, 38a, 38b, 38c, 38'),
at least one of the arms (2a, 2b, 2c) of the boom (2) being provided with at least one sensor (6, 6a, 6b, 6c), each sensor (6, 6a, 6b, 6c) measuring a distance (d) between the surface (S) of the ground and this sensor (6, 6a, 6b, 6c) or, if applicable, between vegetation planted in the ground and that sensor (6, 6a, 6b, 6c) and the control unit (5) being
- connected to each sensor (6, 6a, 6b, 6c),
- provided with a memory (52) for storing the information (d) provided by each sensor (6, 6a, 6b, 6c) and
- able to control the raising/lowering mechanism (30) according to the information (d) stored in the memory (52),
the method being **characterised in that** it comprises steps in which:
a2) before spraying, the user enters into the control unit 5 the value of a minimum distance (dₘᵢₙ) and the value of an intermediate distance (dᵢₙₜ) greater than the minimum distance (dmin).
b2) during spraying, as soon as the distance (d) measured by at least one sensor (6, 6a, 6b, 6c) is less than the minimum distance (dₘᵢₙ) predetermined in step a2), the control unit (5) actuates the raising/lowering mechanism (30) of the boom (2) to rapidly move the boom (2) away from the surface (S) until the distance (d) measured by this or these sensor(s) (6, 6a, 6b, 6c) is equal to the intermediate distance (dᵢₙₜ) predetermined in step a2).

6. The spraying method according to claim 5, **characterised in that** it comprises an additional step c1), subsequent to step a2) and not taking priority over step b2), in which the user uses the manual control system (38') of the raising/lowering mechanism (30) to move the boom (2) away from or towards the surface (S) and/or uses the manual control system (38, 38a, 38b, 38c) of at least one tilting mechanism (3, 3a, 3b, 3c) to tilt at least one of the arms (2, 2a, 2b, 2c).

7. The spraying method according to one of claims 5 or 6, **characterised in that** the control unit (5) is able to control at least one tilting mechanism (3, 3a, 3b, 3c) as a function of the information (d) stored in the memory (52), and **in that** the method comprises an additional step c2), subsequent to step a2) and not taking priority over step b2), in which the control unit (5) actuates at least one tilting mechanism (3, 3a, 3b, 3c) so that each arm (2a, 2b, 2c) associated with said tilting mechanism(s) (3, 3a, 3b, 3c) is generally parallel to a portion of the surface (S) situated vertically to that arm (2a, 2b, 2c).

8. The spraying method according to one of claims 5 to 7, **characterised in that** the minimum distance (dₘᵢₙ) is between 30 cm and 70 cm, preferably on the order of 50 cm.

9. The spraying method according to one of claims 5 to 8, **characterised in that** the intermediate distance (dᵢₙₜ) is between 50 cm and 100 cm, preferably on the order of 70 cm.

10. The spraying method according to any one of claims 5 to 9, **characterised in that** at least one of the arms (2a, 2b, 2c) of the boom (2) is equipped with at least two sensors (6, 6a, 6b, 6c).

11. A method of spraying a phytosanitary liquid on a cultivated area by means of an agricultural machine (1) for spraying a phytosanitary liquid on a cultivated area, comprising
- means (10, 11) for moving the machine (1) over a surface (S) of the ground,
- a spray boom (2) for spraying the phytosanitary liquid comprising at least one arm (2a, 2b, 2c),
- a mechanism (3, 3a, 3b, 3c) for tilting the boom (2) and/or at least one of the arms (2a, 2b, 2c) with respect to the chassis (12) of the machine (1),
- a mechanism (30) for raising/lowering the boom (2) along an axis (Z1) that is fixed with respect to the chassis (12) of the machine (1) and vertical, or even substantially vertical, when the machine (1) is resting on a flat, horizontal surface (S), and
- a control unit (5),
the agricultural machine being provided with a manual control system (38, 38a, 38b, 38c, 38') for the raising/lowering mechanism (30) and/or at least one tilting mechanism (3, 3a, 3b, 3c), a cabin of the machine (1) being configured in such a way that a user can simultaneously operate the means (10, 11) for moving the machine (11), with the steering wheel (11) and the manual control system (38, 38a, 38b, 38c, 38'),
at least one of the arms (2a, 2b, 2c) of the boom (2) being provided with at least one sensor (6, 6a, 6b, 6c), each sensor (6, 6a, 6b, 6c) measuring a distance (d) between the surface (S) of the ground and this sensor (6, 6a, 6b, 6c) or, if applicable, between vegetation planted in the ground and that sensor (6, 6a, 6b, 6c) and
the control unit (5) being
- connected to each sensor (6, 6a, 6b, 6c),
- provided with a memory (52) for storing the information (d) provided by each sensor (6, 6a, 6b, 6c) and
- able to control the raising/lowering mechanism (30) according to the information (d) stored in the memory (52),
the method being **characterised in that** it comprises steps in which:
a3) before spraying, the user enters into the control unit (5) the value of a minimum distance (dmin), the value of a maximum distance (dₘₐₓ) and the value of an intermediate distance (dᵢₙₜ) between the minimum distance (dₘᵢₙ) and the maximum distance (dmax),
b31) during spraying, as soon as the distance measured by at least one sensor (6, 6a, 6b, 6c) is less than the minimum distance (dₘᵢₙ) predetermined in step a3), the control unit (5) actuates the raising/lowering mechanism (30) of the boom (2) to rapidly move the boom (2) away from the surface (S) until the distance (d) measured by this or these sensor(s) (6, 6a, 6b) is equal to the intermediate distance (dᵢₙₜ) predetermined in step a3),
b32) during spraying, as soon as the distance (d) measured by each sensor (6, 6a, 6b, 6c) is greater than the maximum distance (dₘₐₓ) predetermined in step a3), the control unit (5) actuates the raising/lowering mechanism (30) of the boom (2) to rapidly move the boom (2) closer to the surface (S) until the distance (d) measured by at least one sensor (6, 6a, 6b, 6c) is equal to the intermediate distance (dᵢₙₜ) predetermined in step a3).

12. The spraying method according to claim 11, **characterised in that** it comprises an additional step c1), subsequent to step a3) and not taking priority over step b31), in which the user uses the manual control system (38') of the raising/lowering mechanism (30) to move the boom (2) away from or towards the surface (S) and/or uses the manual control system (38, 38a, 38b, 38c) of at least one tilting mechanism (3, 3a, 3b, 3c) to tilt at least one of the arms (2, 2a, 2b, 2c).

13. The spraying method according to one of claims 11 or 12, **characterised in that** the control unit (5) is able to control at least one tilting mechanism (3, 3a, 3b, 3c) as a function of the information (d) stored in the memory (52), and **in that** the method comprises an additional step c2), subsequent to step a3) and not taking priority over step b31), in which the control unit (5) actuates at least one tilting mechanism (3, 3a, 3b, 3c) so that each arm (2a, 2b, 2c) associated with said tilting mechanism(s) (3, 3a, 3b, 3c) is generally parallel to a portion of the surface (S) situated vertically to that arm (2a, 2b, 2c).

14. The spraying method according to one of claims 11 to 13, **characterised in that** the minimum distance (dₘᵢₙ) is between 30 cm and 70 cm, preferably on the order of 50 cm.

15. The spraying method according to one of claims 11 to 14, **characterised in that** the maximum distance (dₘₐₓ) is between 70 cm and 150 cm, preferably on the order of 100 cm.

16. The spraying method according to one of claims 11 to 15, **characterised in that** the intermediate distance (dᵢₙₜ) is between 50 cm and 100 cm, preferably on the order of 70 cm.

17. The spraying method according to any one of claims 11 to 16, **characterised in that** at least one of the arms (2a, 2b, 2c) of the boom (2) is equipped with at least two sensors (6, 6a, 6b, 6c).
